Europäisches Patentamt

European Patent Office

Office européen des brevets

(11) Publication number: **0 243 050 B1**

## EUROPEAN PATENT SPECIFICATION

(45) Date of publication of patent specification: **30.12.92** (51) Int. Cl.⁵: **F16D 67/00**, F16H 35/00, F16D 7/00, F16H 35/12

(21) Application number: **87303142.1**

(22) Date of filing: **10.04.87**

(54) Rotary transmission unit.

<table>
<tr><td>(30) Priority: <b>17.04.86 GB 8609364</b></td><td>(73) Proprietor: <b>Dowty Rotol Ltd.<br>Cheltenham Road<br>Staverton Gloucester(GB)</b></td></tr>
<tr><td>(43) Date of publication of application:<br><b>28.10.87 Bulletin 87/44</b></td><td></td></tr>
<tr><td>(45) Publication of the grant of the patent:<br><b>30.12.92 Bulletin 92/53</b></td><td>(72) Inventor: <b>Smith, John Dennis<br>20, Castlefields Drive, Charlton Kings,<br>Cheltenham, Gloucestershire, GL52 6YP(GB)</b></td></tr>
<tr><td>(84) Designated Contracting States:<br><b>DE FR GB IT</b></td><td>(74) Representative: <b>Bousfield, Roger James<br>Patents Department Dowty Group Services<br>Limited Arle Court<br>Cheltenham, Glos. GL51 0TP(GB)</b></td></tr>
<tr><td>(56) References cited:<br><b>DE-A- 2 917 028<br>GB-A- 2 136 526<br>US-A- 3 621 958<br>US-A- 3 667 578</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 243 050 B1

# Description

This invention relates to a rotary transmission unit and in particular a rotary transmission unit suitable for use with aircraft.

In a known type of rotary transmission unit such as that disclosed in GB-A-2136526 the drive applied to input shaft is transmitted from the input shaft to the output shaft by means of a ball and ramp plate assembly. The problems experienced in using this type of assembly result from any relative motion between the input ramp plate and output ramp plate, as this applies a brake means associated with the output ramp plate.

When this type of unit is driven under load (Aided drive) the input and output ramp plates tend to move relative to one another. This in turn causes the brake means to be applied and disengaged on a continuous basis. The net result of this type of action is that the brake means is locked and unlocked leading to a juddering drive.

The juddering drive may lead to premature failure of the transmission unit because fatigue will be enhanced in crucial components. In view of the vital job these transmission units do in relation to the aircraft, this means that the equipment is subjected to regular check and overhaul.

In accordance with the present invention, a rotary transmission unit comprises
- an input ramp plate
- an output ramp plate
- a number of displaceable elements interposed between the ramp plates
- a brake means arranged to apply a torque load to the output ramp plate as a result of relative motion between the ramp plates characterised in that
- an arrestor is arranged to apply a torque load to the input ramp plate

to in operation apply a continuous torque load to the input ramp plate to dampen fluctuations in the output of the unit.

The application of a continuous torque load to the input ramp plate means that during aided drive relative acceleration of the output ramp plate is dampened. In turn the output ramp plate tends to more closely follow the input ramp plate, which in turn means that the juddered drive is eliminated, or at the very least reduced to a mere ripple effect.

Normally, the transmission unit is driven by a drive member positioned and arranged so that drive is transmitted simultaneously to both the input and output ramp plates. Preferably the drive member is positioned so that it is interposed between the input and output ramp plates.

In a typical arrangement the drive member has three equispaced extending arms, each of which comprises a drive dog. The drive dog may be shaped so that it is in driving contact with a slot in each of the input and output ramp plates so that the drive may be transmitted to both the input and output ramp plates simultaneously.

Further, the drive member and the displaceable elements may be arranged so that the drive dogs and the elements are substantially in the same plane, with each displaceable element being positioned between two drive dogs and vice versa. Effectively, in this type of arrangement of the drive member there are equal numbers of drive dogs and displaceable elements.

The slots provided in the input and output ramp plates are provided for engagement with the drive dogs. These slots are of such dimensions that a small amount of relative motion with the drive dog is possible. The amount of this motion is limited by the physical dimensions of the component parts of the apparatus associated with the drive member.

The positional inter-relationship between the drive member, displaceable elements and the input and output ramp plates helps to provide in normal driven use a transmission unit having an efficient transfer of drive from the input to the output shaft, whilst preventing a transfer of drive from the output shaft to the input shaft.

The arrestor is preferably a plate type brake and most preferably a single plate type brake. The brake plate or plates being interposed between two friction plates, the interacting surfaces of which are provided with a pad of braking material.

The brake means is, preferably, a multi plate brake means, each of which plates are interposed between two friction plates. The interacting surfaces are again provided with a pad of braking material.

The displaceable elements may be any element or elements which are symmetrical about an access thereof and which will not be hindered from rolling e.g. a roller or ball shape. The displaceable elements are preferably ball bearings.

The arrestor is supplied with means which enable a continuous, and possibly constant, torque force to be applied to the plate brake. This force is, advantageously, not sufficient to prevent rotation of the input shaft, however is sufficient to dampen the fluctuations in the drive applied the input shaft.

This invention will now be described by way of example with reference to the accompanying drawings in which;

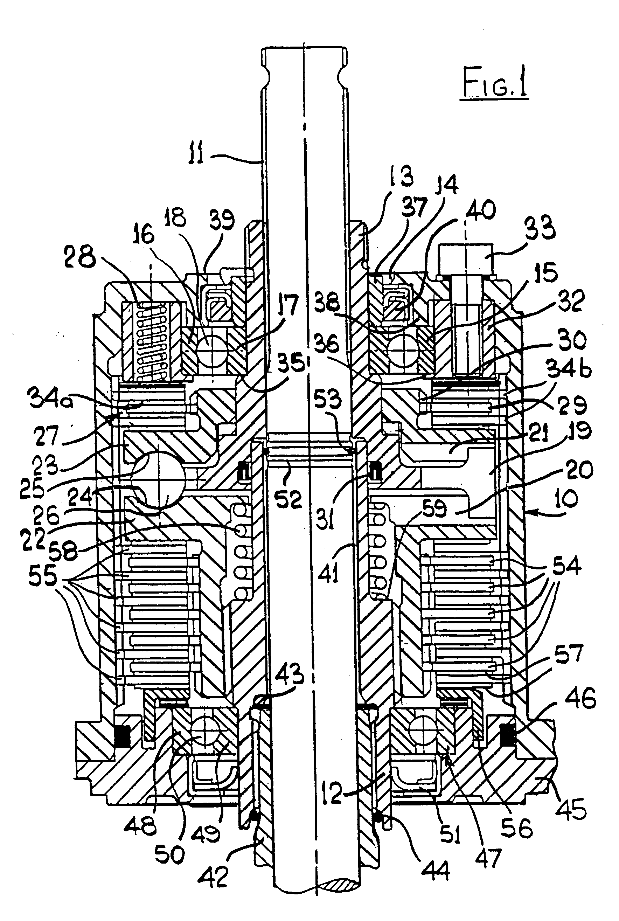

Figure 1    is a cross sectional view of a rotory transmission unit in accordance with the invention;

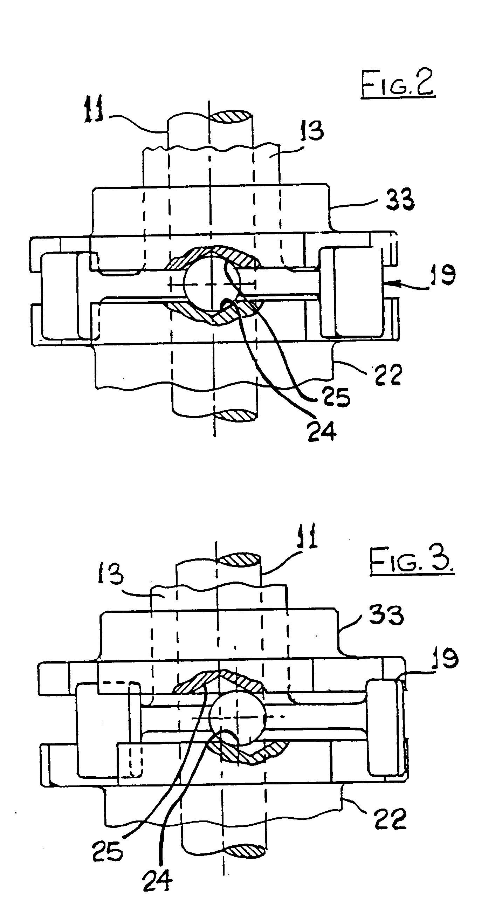

Figure 2    is a schematic drawing of the input ramp plate, output ramp plate and displaceable element of the rotory transmission unit of Figure 1 in driving mode; and

Figure 3     is a schematic drawing of the apparatus of Figure 2 in a brake applying arrangement

With reference to the accompanying drawings a transmission unit is housed in a casing 10 and includes an input shaft 11 and an output shaft 12.

The input shaft 11 passes through an opening 14 in the casing 10 and is driveably connected to a drive member 13: the shaft 11 effectively connects the transmission unit to the drive of a motor (not shown). The drive member 13 is in splined engagement with the input shaft 11 and is provided with a bearing assembly 15 having races 16 and 17 and ball bearings 18 so as to ensure free rotation of the drive member 13.

The drive member 13 is provided with three equispaced drive dogs 19 extending outwardly therefrom. The dogs 19 are housed in clearance slots 20, 21 of an output ramp plate 22 and an input ramp plate 23 respectively. The output ramp plate and the input ramp plate in conjunction with three ball bearings 26 housed in grooves 24, 25 in the respective ramp plates form a ball and ramp actuator.

The ball bearings 26 and dogs 19 are normally circumferentially interposed about the input shaft 11.

The input ramp plate 23 is provided with a arrestor 27, which applies a preset drag torque to the ramp plate 23 to restrain the movement of the input ramp plate.

The arrestor 27 comprises a circumferential collar 32 within which are housed six springs 28 and two screws 33; a pressure plate 29 which circumferential extends around and is in driveable contact by means of splines 30 with the input ramp plate 23, and a pair of brake plates 34b which circumferential extend around the input ramp plate. The pressure plate is interposed between the brake plates 34 and between the interacting surfaces of the pressure plate 29 and the brake plate 34b is placed a layer 34a of brake material.

The bearing assembly 15 is held in position between the input ramp plate 23 and the collar 32 by a shoulder 35 on the input ramp plate 23, an extension 36 on the collar 32, a sleeve 37 which circumferentially surrounds the input ramp plate 23 at a point near to the aperture 14 in the casing 10 and a protrusion 38 extending down from the casing top surface 39.

The bearing assembly acts to hold a seal 40 in position between the sleeve 37, protrusion 38 and the top surface 39. This seal 40 prevents escape of oil housed within the casing 10 via aperture 14.

The input shaft 11 extends through a through bore 41 in the output shaft 12, and does not contact the said shaft 12.

The input shaft 11 is in driving contact with a transmission member 42, which may be part of the equipment being driven or a separate member provided to perform the function of transmitting the drive. The transmission member 42 is in splined contact with the output shaft and abuts a shoulder 43 of the output shaft 12.

The drive from the input shaft 11 is therefore transmitted by the following route, input shaft to transmission member 42 to output shaft.

In order to prevent excess movement of the input shaft and output shaft with respect to one another a metal circlip 53 is mounted in a metal groove 52 in the input shaft. Further a metal circlip 44 is mounted between the member 42 and the output shaft 12 to do the same function.

In order to prevent egress of fluid e.g. Oil into the areas defined by the output shaft and input shaft via the interfaces between the ramp plates 22,23 a seal 31 is provided.

The output shaft 12, input shaft 11 and collar 42 extend through an aperture in a base member 45 on which the casing 10 is mounted; a sealing contact between base member and casing being provided by a seal 46.

The base member may be mounted on or formed integrally with an ancillary piece of equipment.

A bearing assembly 47 having circumferential races 48, 49 and ball bearings 50 is mounted between output shaft 12 and the base member 45 to ensure free rotation of the output shaft 12. The bearing assembly 47 also acts to hold a seal 51 in position in the base 45 around the output shaft 12. This seal prevents escape of oil in the unit through the aperture provided for the shafts etc.

The output ramp plate 22 is in splined contact with the output shaft 12 and five pressure members 54. Each of the pressure members circumferentially extends around the output ramp plate, and forms part of a multi plate brake means.

The multi plate brake means also includes six circumferential friction plates 55. Each of the pressure members 54 is interposed between two of the friction plates 55 with the lower-most friction plate being supported by a support ring 56 mounted on the base member 45. A layer 57 of brake material is provided between each of the interengaging surfaces of the pressure members 54 with the friction plates 55 as well as on the two non-engaging surfaces of the friction plates 55.

The output ramp plate 22 is biased against the ball bearings 26 of the ball and ramp actuator by a reaction spring 58 which acts between a shoulder 59 of the output ramp plate 22 and a protrusion 60 on the output ramp plate 22.

In normal operation a driving load is transmitted from the input shaft 11 to the dogged drive member 13 and there from to the output ramp plate 22 and the output shaft 12 by abutment of the dogs with the walls of the slots 20, 21. Relative rotation between the input and output ramp plates 23 and 22 is thereby prevented.

When the input to the input shaft 11 is stopped for example by de-energisation of the motor, back driving loads act so as to rotate the output ramp plate 22 relative to the input ramp plate 23. The relative rotation causes the ball bearings 26 to ride up the angled ramp grooves 24,25 thereby applying a force to the multiplate brake means. When and if the back driving load exceeds a preset load, the load transferred to the brake means via the ball and ramp actuator is increased so as to counteract this back driving and hold the output shaft stationary.

If it is necessary to rotate the output shaft 12 in the same direction as that in which the back driving load would drive the output shaft load is applied to the input shaft 11 sufficient to slip the arrestor 27 and allow the input ramp plate 23 to rotate. The ball bearings are thus caused to move back down the grooves 24,25 so as to reduce the force applied to the brake means. The reduction in the force applied will allow the back driving load to rotate the output shaft 12. During this operation the output ramp plate 22 will be accelerated until it overtakes the input ramp plate 23 at which time the ball bearings 26 will be driven back up the grooves 24,25 thereby increasing the braking force from the brake means. The increase in force applied by the brake means reduces the rotational speed of the output shaft 12 until it approximates to that of the input shaft 11; the output shaft 12 will stabilise at this speed.

## Claims

1. A rotory transmission unit which comprises
   a) an input ramp plate (23);
   b) an output ramp plate (22);
   c) a number of displaceable elements (26) interposed between the ramp plates;
   d) a brake means (55, 54, 57) arranged to apply a torque load to the output ramp plate (22) as a result of relative motion between the ramp plates;
   characterised in that
   e) an arrestor (27) is arranged to apply a torque load to the input plate (23),
   to in operation apply a continuous torque load to the input ramp plate (23) to dampen fluctuation in the output of the unit.

2. A rotory transmission unit as claimed in claim 1, which further comprises a drive member (13) which is positioned so that it is interposed between the input and output ramp plates.

3. A rotory transmission unit as claimed in claim 1 or claim 2 wherein the displaceable elements (26) are ball bearings.

4. A rotory transmission unit as claimed in claim 2 or claim 3 wherein the drive member (13) has drive dogs (19) which engage in slots (21, 20) in the input ramp plate (23) and the output ramp plate (22).

5. A rotory transmission unit as claimed in any one of the preceding claims wherein the arrestor (27) is a plate type brake.

6. A rotory transmission unit as claimed in claim 5 wherein the plate type brake has a single brake plate (29) which interacts with two friction plates (34b).

7. A rotory transmission unit as claimed in any one of the preceding claims in which the brake means (55, 54, 57) is a multiplate brake means.

## Patentansprüche

1. Rotationsübertragungseinheit mit
   a) einer Eingangsrampenplatte (23);
   b) einer Ausgangsrampenplatte (22);
   c) einer Anzahl verstellbarer Elemente (26), die zwischen die Rampenplatten zwischengeschaltet sind;
   d) Bremsmitteln (55, 54, 57), die als Folge einer Relativbewegung zwischen den Rampenplatten ein Drehmoment auf die Ausgangsrampenplatte (22) ausüben;
   dadurch gekennzeichnet, daß
   e) eine Anhaltevorrichtung (27) vorgesehen ist, die ein Drehmoment auf die Eingangsplatte (23) ausübt,
   um im Betrieb ein kontinuierliches Drehmoment auf die Eingangsrampenplatte (23) auszuüben und dadurch Fluktuationen in der Ausgangsleistung der Einheit zu dämpfen.

2. Rotationsübertragungseinheit nach Anspruch 1, die ferner ein Antriebsglied (13) aufweist, das so angeordnet ist, daß es zwischen die Eingangs- und Ausgangsrampenplatte zwischengeschaltet ist.

3. Rotationsübertragungseinheit nach Anspruch 1 oder 2, bei der die verstellbaren Elemente (26) Kugellager sind.

4. Rotationsübertragungseinheit nach Anspruch 2 oder 3, bei der das Antriebsglied (13) Mitnehmer (19) besitzt, die in Schlitze (21, 20) in der Eingangsrampenplatte (23) und der Ausgangsrampenplatte (22) greifen.

**5.** Rotationsübertragungseinheit nach einem der vorhergehenden Ansprüche, bei dem die Anhaltevorrichtung (27) eine Lamellenbremse ist.

**6.** Rotationsübertragungseinheit nach Anspruch 5, bei der die Lamellenbremse eine einzige Bremslamelle (29) aufweist, die mit zwei Reiblamellen (34b) zusammenwirkt.

**7.** Rotationsübertragungseinheit nach einem der vorhergehenden Ansprüche, bei der die Bremsmittel (55, 54, 57) aus einer Mehrlamellenbremse bestehen.

## Revendications

**1.** Ensemble rotatif de transmission, qui comporte
a) une plaque d'entrée (23) à rampe,
b) une plaque de sortie (22) à rampe,
c) un certain nombre d'éléments mobiles (26) placés entre les plaques à rampe,
d) un dispositif de freinage (55, 54, 57) destiné à appliquer un couple de forces à la plaque à rampe de sortie (22) lors du déplacement relatif des plaques à rampe,
   caractérisé en ce que
e) un organe d'arrêt (27) est disposé afin qu'il applique une couple de forces à la plaque d'entrée (23),
   afin que, pendant le fonctionnement, un couple continu de forces soit appliqué à la plaque à rampe d'entrée (23) et amortisse les fluctuations à la sortie de l'ensemble.

**2.** Ensemble rotatif de transmission selon la revendication 1, qui comporte en outre un organe menant (13) disposé afin qu'il soit placé entre les plaques à rampe d'entrée et de sortie.

**3.** Ensemble rotatif de transmission selon la revendication 1 ou 2, dans lequel les éléments mobiles (26) sont des billes de support.

**4.** Ensemble rotatif de transmission selon la revendication 2 ou 3, dans lequel l'organe menant (13) a des griffes (19) d'entraînement qui pénètrent dans des fentes (21, 20) de la plaque à rampe d'entrée (23) et de la plaque à rampe de sortie (22).

**5.** Ensemble rotatif de transmission selon l'une quelconque des revendications précédentes, dans lequel l'organe d'arrêt (27) est un frein à plateau.

**6.** Ensemble rotatif de transmission selon la revendication 5, dans lequel le frein à plateau a un plateau unique de freinage (29) qui coopère avec deux plateaux de friction (34b).

**7.** Ensemble rotatif de transmission selon l'une quelconque des revendications précédentes, dans lequel le dispositif de freinage (54, 54, 57) est un dispositif de freinage à plusieurs plateaux.

Fig.1

FIG.2

FIG.3.